# EUROPÄISCHE PATENTSCHRIFT

(11) **EP 2 637 176 B1**
(45) Veröffentlichungstag und Bekanntmachung des Hinweises auf die Patenterteilung: **06.01.2016**
(21) Anmeldenummer: 12158388.4
(22) Anmeldetag: 07.03.2012
(51) Int. Cl.: H01B 3/02, H01B 3/34, H01B 3/40, H01F 27/28, H01F 27/32

(54) **Giessharztransformator**
Resin encapsulated transformer
Tansformateur à imprégnation intégrale de résine

(43) Veröffentlichungstag der Anmeldung: 11.09.2013
(73) Patentinhaber: Siemens Aktiengesellschaft, 80333 München (DE)
(72) Erfinder: Hofmann, Bernd, 73230 Kirchheim (DE); Seidel, Christian, Dr., 90571 Schwaig (DE)

(56) Entgegenhaltungen:
- EP-A1- 0 185 596
- GB-A- 2 169 146
- KR-A- 20090 110 188
- US-A1- 2004 056 537

## Beschreibung

Die Erfindung betrifft einen Gießharztransformator mit einer elektrischen Wicklung gemäß dem Oberbegriff des Patentanspruchs 1.

Elektrische Wicklungen, wie sie in elektrischen Maschinen wie Motoren, Generatoren, Drosseln oder Transformatoren Verwendung finden, setzen einen Teil der elektrischen Leistung in Wärme um. Ab einer bestimmten Leistungsklasse, sind Maßnahmen zum Wärmemanagement notwendig, die eine Überhitzung der elektrischen Wicklung verhindern. Typische Beispiele solcher Maßnahmen sind Kühlkörper, Kühlkanäle, Kühlung durch Flüssigkeiten oder durch Luftströmung. Bei Maschinen, die starken zeitlichen Leistungsschwankungen unterworfen sind, treten in der elektrischen Wicklung Temperaturschwankungen auf. So wird beispielsweise ein Transformator in einem Solarpark tagsüber bei Sonnenschein an seiner Leistungsgrenze betrieben und entsprechend heiß werden und nachts wieder abkühlen. Ähnliche Beispiele hierfür sind Transformatoren in der Stromversorgung für den öffentlichen Personennahverkehr, Motoren in Aufzügen oder zum Anfahren großer Anlagen. Bei solchen Anwendungen werden die elektrischen Wicklungen erfahrungsgemäß nach der größten Wärmebelastung dimensioniert. Durch eine verbesserte Wärmebelastbarkeit dieser elektrischen Wicklungen könnte die Dimensionierung entsprechend kleiner ausfallen, was kostengünstiger ist und einen verbesserten Wirkungsgrad zur Folge hat.

Aus der EP 1 298 680 A2 ist ein gattungsgemäßer Gießharztransformator bekannt. Dieser weist einen dreischenkligen Kern auf. Auf jedem der drei Kernschenkel ist eine Wicklungskombination aus einer äußeren Wicklung und einer inneren Wicklung angeordnet koaxial zueinander angeordnet. Zumindest die äußere Wicklung ist jeweils als Gießharzwicklung ausgeführt. Die Kühlung erfolgt durch einen zwischen der inneren und der äußeren Wicklung belassenen Ringkanal.

Aus der US 2004/056537 A1 ist bekannt, bei dynamoelektrischen Maschinen einen elektrisch leitenden Kunststoff mit Additiven aus einem Phasenwechselmaterial zu versetzen, um die Kühlung zu verbessern.

Aus der KR 2009 0110188 A ist eine Spiralwicklung bekannt, die um einen Kern gewunden ist, der ein Phasenwechselmaterial aufweisen kann.

Der vorliegenden Erfindung liegt daher die Aufgabe zugrunde, einen Gießharztransformator mit einer elektrischen Wicklung anzugeben, der über eine besonders gute Wärmebelastbarkeit verfügt.

Die Aufgabe wird mit den Mitteln der Erfindung gemäß Patentanspruch 1 gelöst.

Erfindungsgemäß weist dabei ein Gießharztransformator eine elektrische Wicklung mit einem Wicklungsleiter mit mehreren Windungen auf, wobei die elektrische Wicklung eine Oberspannungswicklung ist und wobei alle Windungen des Wicklungsleiters gemeinsam mit einem Gießharz als Isoliermaterial vergossen sind. Erfindungsgemäß ist vorgesehen, dass in das Gießharz wenigstens ein vom Gießharz verschiedenes Phasenwechselmaterial eingebettet, wobei das Phasenwechselmaterial eine Phasenübergangstemperatur zwischen 40° Celsius und 200° Celsius aufweist.

Ein Phasenwechselmaterial ist dabei ein Material, dessen latente Schmelzwärme, Lösungswärme oder Absorptionswärme wesentlich größer ist als die Wärme, die es aufgrund seiner normalen spezifischen Wärmekapazität ohne den Phasenumwandlungseffekt speichern kann. Die spezifische Phasenumwandlungsenthalpie, also die Energie, die benötigt wird, um das Material von einer Phase in eine andere Phase zu überführen, beträgt dabei meist mehr als 100 Kilojoule pro Kilogramm.

Vorteilhaft daran ist, dass das Phasenwechselmaterial bei einer Erwärmung über die Phasenübergangstemperatur, die zugeführte Wärme ohne Temperaturerhöhung aufnimmt. Erst wenn die gesamte Menge des Phasenwechselmaterials den Phasenübergang vollzogen hat, tritt eine weitere Temperaturerhöhung ein. Bevorzugt wählt man die Phasenübergangstemperatur so, dass diese unterhalb der der Wärmebelastbarkeitsgrenze entsprechenden Temperatur der elektrischen Wicklung liegt. Bei einer kurzzeitigen Spitzenbelastung der elektrischen Wicklung kann so vermieden werden, dass die Wärmebelastbarkeitsgrenze erreicht wird und die Maschine, in der die Wicklung verbaut ist, ausfällt oder abgeschaltet werden muss. Ist die Spitzenbelastung vorüber, kühlt die Wicklung und damit das Phasenwechselmaterial wieder ab. Das Phasenwechselmaterial durchläuft dabei einen Phasenübergang in umgekehrter Richtung wie beim Erwärmen, dabei wird die vorher durch den Phasenübergang gespeicherte Wärme wieder frei.

In einer vorteilhaften Ausgestaltung der Erfindung weist das Phasenwechselmaterial einen Phasenübergang zwischen fest und flüssig bei einer Phasenübergangstemperatur zwischen 40° Celsius und 200° Celsius auf. Phasenwechselmaterialien mit einem Phasenwechsel von fest nach flüssig weisen häufig eine besonders vorteilhafte Phasenumwandlungsenthalpie auf. Eine Phasenübergangstemperatur zwischen 40° Celsius und 200° Celsius ist besonders gut für den typischen Einsatzbereich der Erfindung geeignet.

Besonders vorteilhaft ist dabei, wenn das Phasenwechselmaterial ein Material oder eine Mischung aus Materialien aus der Gruppe der Paraffine, der Salzhydrate und deren Mischungen oder der Salze und deren eutektischen Mischungen enthält. Diese Phasenwechselmaterialen sind besonders kostengünstig und decken einen breiten Temperaturbereich der Phasenübergangstemperatur ab.

In einer weiteren vorteilhaften Ausgestaltung ist das Phasenwechselmaterial in Mikrokapseln eingeschlossen. Die Mikrokapseln können dabei entweder durch Hohlräume in der Isolierung gebildet werden, vorzugsweise werden aber Volumina von 0,1 ml bis 10 ml des Phasenwechselmaterials in Kapseln mit einer festen Kapselwand eingeschlossen. Dadurch liegt das flüssige Phasenwechselmaterial in einer granulatartigen Form vor und kann leicht verarbeitet werden, also beispielsweise mit dem Isoliermaterial, das ebenfalls in granulatartiger Form vorliegen kann, gemischt werden.

Vorzugsweise weist das Phasenwechselmaterial einen Phasenübergang zwischen fest und fest bei einer Phasenübergangstemperatur zwischen 40° Celsius und 200° Celsius auf. Vorteilhaft hieran ist, dass bei solchen Materialien die Dichteänderungen beim Phasenwechsel besonders klein ausfallen, und so die Isolierung mechanisch weniger durch bei Temperaturänderungen expandierendes beziehungsweise komprimierendes Phasenwechselmaterial belastet wird.

Dabei wird vorzugsweise ein Material oder eine Mischung aus Materialien aus der Gruppe der Paraffine, der Polyalkohole, der Salzhydrate oder der vernetzten Makromoleküle als Phasenwechselmaterial gewählt.

Die Isoliermaterialien, die bekanntermaßen für die Isolierung von elektrischen Wicklungen eingesetzt werden, haben häufig nur eine geringe Wärmeleitfähigkeit. Um die von der elektrischen Wicklung produzierte Wärme besser aufnehmen und wieder abgeben zu können, können dem Isoliermaterial Mittel zur Erhöhung der Wärmeleitfähigkeit zugesetzt sein. Dies kann beispielsweise Graphit sein. Falls das Zusatzmittel elektrisch isolierende Eigenschaften aufweisen soll, können beispielsweise keramische Partikel wie Aluminiumoxid, Siliziumkarbid oder Bornitrid verwendet werden.

Ferner kann es vorteilhaft sein, wenn in das Isoliermaterial wenigstens zwei verschiedene Phasenwechselmaterialien mit verschiedenen Phasenübergangstemperaturen eingebettet sind, die insbesondere miteinander vermischt sind. Durch eine Mischung von Materialien mit verschiedenen Phasenübergangstemperaturen kann die resultierende Phasenübergangstemperatur auf die gewünschte Maximaltemperatur der elektrischen Wicklung angepasst werden.

Erfindungsgemäß sind mehrere insbesondere alle Windungen des Wicklungsleiters gemeinsam mit dem Isoliermaterial vergossen. Eine solche teilweise oder vollständig vergossene elektrische Wicklung ist besonders gut gegen Umwelteinflüsse geschützt.

Im Folgenden wird die Erfindung anhand der Zeichnung näher erläutert. Dabei zeigt:

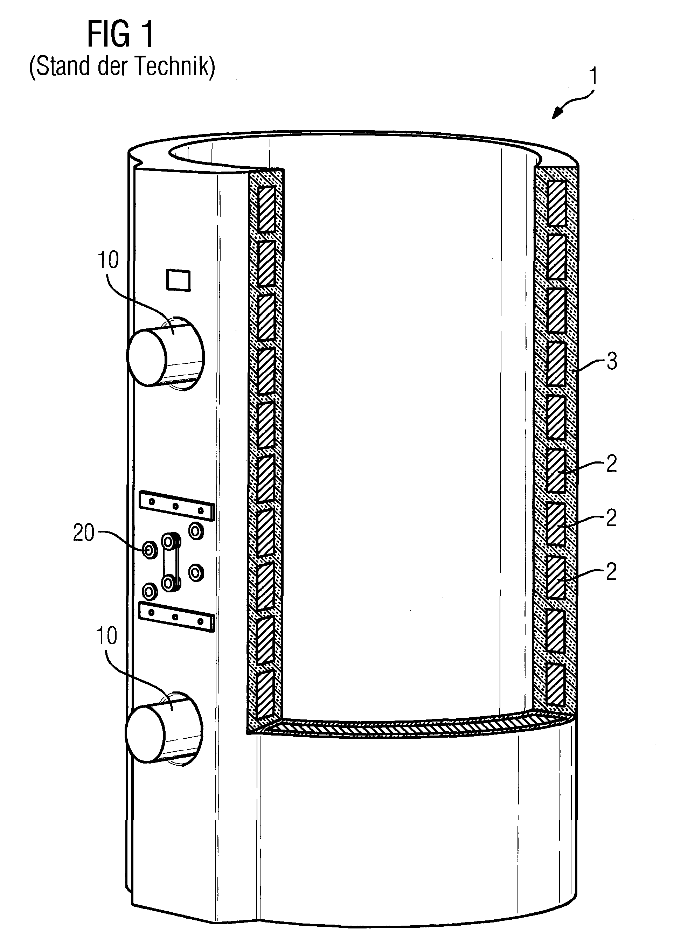

- Figur 1: eine Schnittdarstellung einer elektrischen Wicklung gemäß dem Stand der Technik

Die Figur 1 zeigt eine elektrische Wicklung 1, wie sie aus dem Stand der Technik bekannt ist. Dargestellt ist eine einzelne Oberspannungswicklung 1 eines Gießharztransformators. Diese ist im oberen Teil aufgeschnitten, so dass die Schnittflächen von mehreren Windungen des Wicklungsleiters 2 zu sehen sind. Die Windungen des Wicklungsleiters sind gemeinsam von einer elektrischen Isolierung 3 umschlossen. Das Isoliermaterial der elektrischen Isolierung 3 besteht hier aus einem Gießharz. Dieses wird unter Vakuum in eine Form gegossen, die den Wicklungsleiter 2 enthält. Zu sehen sind außerdem die Schaltverbindungen 10 mit denen die Wicklung 1 beispielsweise in einer Dreieckschaltung mit weiteren Wicklungen zusammengeschaltet werden kann und die Anzapfungen 20, mittels derer die Anzahl der zur Oberspannungswicklung zusammengeschalteten Windungen des Wicklungsleiters 2 verändert werden kann.

Das Isoliermaterial ist hier ein Gießharz. Meist werden dabei Epoxidharze verwendet. Weitere Bestandteile des Isoliermaterials können Verstärkungsmaterialien wie Glasmehl, Glasfasern oder anorganische Füllstoffe, Füllstoffe zur Erhöhung der Wärmeleitfähigkeit wie beispielsweise Aluminiumoxid oder Siliziumkarbid sowie Verarbeitungshilfsstoffe wie Reaktionsverdünner oder Dispersionsadditive sein.

Erfindungsgemäß ist in das Isoliermaterial ein Phasenwechselmaterial (hier nicht sichtbar) eingebettet. Dieses Phasenwechselmaterial kann dem Isoliermaterial entweder direkt vor dem Verguss beigemischt werden, oder es kann dem Isoliermaterial bereits beigemengt sein. Das Isoliermaterial kann dabei beispielsweise in flüssiger Form oder als Granulat vorliegen und auch aus mehreren Komponenten bestehen, wie zum Beispiel einem Harz und einem Härter. Das Phasenwechselmaterial kann in dem Isoliermaterial homogen oder inhomogen verteilt sein, beispielsweise könnte das Phasenwechselmaterial in der Nähe des Wicklungsleiters 2 höher konzentriert sein, als im Randbereich der Isolierung. Dies könnte beispielsweise erreicht werden, indem vor dem Verguss Phasenwechselmaterial auf den Wicklungsleiter 2 aufgebracht wird.

## Patentansprüche

1. Gießharztransformator mit einer elektrischen Wicklung (1) mit einem Wicklungsleiter (2) mit mehreren Windungen, wobei die elektrische Wicklung eine Oberspannungswicklung ist und wobei alle Windungen des Wicklungsleiters (2) gemeinsam mit einem Gießharz als Isoliermaterial vergossen sind,
**dadurch gekennzeichnet, dass**
in das Gießharz wenigstens ein vom Gießharz verschiedenes Phasenwechselmaterial eingebettet ist, wobei das Phasenwechselmaterial eine Phasenübergangstemperatur zwischen 40° Celsius und 200° Celsius aufweist.

2. Gießharztransformator nach Anspruch 1,
**dadurch gekennzeichnet, dass**
das Phasenwechselmaterial einen Phasenübergang zwischen fest und flüssig bei einer Phasenübergangstemperatur zwischen 40° Celsius und 200° Celsius aufweist.

3. Gießharztransformator nach Anspruch 2,
**dadurch gekennzeichnet, dass**
das Phasenwechselmaterial ein Material oder eine Mischung aus Materialien aus der Gruppe der Paraffine, der Salzhydrate und deren Mischungen oder der Salze und deren eutektischen Mischungen enthält.

4. Gießharztransformator nach einem der vorangehenden Ansprüche,
**dadurch gekennzeichnet, dass**
das Phasenwechselmaterial in Mikrokapseln eingeschlossen ist.

5. Gießharztransformator nach Anspruche 1,
**dadurch gekennzeichnet, dass**
das Phasenwechselmaterial einen Phasenübergang zwischen fest und fest bei einer Phasenübergangstemperatur zwischen 40° Celsius und 200° Celsius aufweist.

6. Gießharztransformator nach Anspruch 5,
**dadurch gekennzeichnet, dass**
das Phasenwechselmaterial ein Material oder eine Mischung aus Materialien aus der Gruppe der Paraffine, der Polyalkohole, der Salzhydrate oder der vernetzten Makromoleküle enthält.

7. Gießharztransformator nach einem der vorangehenden Ansprüche,
**dadurch gekennzeichnet, dass**
dem Isoliermaterial Mittel zur Erhöhung der Wärmeleitfähigkeit zugesetzt sind.

8. Gießharztransformator nach einem der vorangehenden Ansprüche,
**dadurch gekennzeichnet, dass**
in das Isoliermaterial wenigstens zwei verschiedene Phasenwechselmaterialien mit verschiedenen Phasenübergangstemperaturen eingebettet sind, die insbesondere miteinander vermischt sind.

## Claims

1. Resin-encapsulated transformer comprising an electrical winding (1) with a winding conductor (2) having multiple turns, the electrical winding being an overvoltage winding and all of the turns of the winding conductor (2) being cast together with a casting resin as insulating material,
**characterized in that**
at least one phase change material that is different from the casting resin is embedded in the casting resin, the phase change material having a phase transition temperature of between 40° Celsius and 200° Celsius.

2. Resin-encapsulated transformer according to Claim 1,
**characterized in that**
the phase change material has a phase transition between solid and liquid at a phase transition temperature of between 40° Celsius and 200° Celsius.

3. Resin-encapsulated transformer according to Claim 2,
**characterized in that**
the phase change material contains a material or a mixture of materials from the group of paraffins, salt hydrates and mixtures thereof or salts and eutectic mixtures thereof.

4. Resin-encapsulated transformer according to one of the preceding claims,
**characterized in that**
the phase change material is enclosed in microcapsules.

5. Resin-encapsulated transformer according to Claim 1,
**characterized in that**
the phase change material has a phase transition between solid and solid at a phase transition temperature of between 40° Celsius and 200° Celsius

6. Resin-encapsulated transformer according to Claim 5,
**characterized in that**
the phase change material contains a material or a mixture of materials from the group of paraffins, polyalcohols, salt hydrates or crosslinked macromolecules.

7. Resin-encapsulated transformer according to one of the preceding claims,
**characterized in that**
means for increasing the thermal conductivity are added to the insulating material.

8. Resin-encapsulated transformer according to one of the preceding claims,
**characterized in that**
at least two different phase change materials with different phase transition temperatures, which are in particular mixed with one another, are embedded in the insulating material.

## Revendications

1. Transformateur à imprégnation intégrale de résine, comprenant un enroulement (1) électrique ayant un conducteur (2) d'enroulement à plusieurs spires, l'enroulement électrique étant un enroulement de haute tension et toutes les spires du conducteur (2) de l'enroulement sont imprégnées en commun d'une résine de coulée comme matière isolante,
**caractérisé en ce que**
il est incorporé dans la résine de coulée au moins une matière à changement de phase différente de la résine de coulée, la matière à changement de phase ayant un point de transition de phase compris entre 40° Celsius et 200° Celsius.

2. Transformateur à imprégnation intégrale de résine suivant la revendication 1,
**caractérisé en ce que**
la matière à changement de phase a une transition de phase entre solide et liquide à un point de transition de phase compris entre 40° Celsius et 200° Celsius.

3. Transformateur à imprégnation intégrale de résine suivant la revendication 1,
**caractérisé en ce que**
la matière à changement de phase contient une matière ou un mélange de matière du groupe des paraffines, des sels hydratés et de leurs mélanges ou des sels et de leurs mélanges eutectiques.

4. Transformateur à imprégnation intégrale de résine suivant l'une des revendications précédentes,
**caractérisé en ce que** la matière à changement de phase est encapsulée dans des microcapsules.

5. Transformateur à imprégnation intégrale de résine suivant la revendication 1,
**caractérisé en ce que** la matière à changement de phase a une transition de phase entre solide et solide à un point de transition de phase compris entre 40° Celsius et 200° Celsius.

6. Transformateur à imprégnation intégrale de résine suivant la revendication 5,
**caractérisé en ce que** la matière à changement de phase contient une matière ou un mélange de matière du groupe des paraffines, des polyalcools, des sels hydratés ou des macromolécules réticulées.

7. Transformateur à imprégnation intégrale de résine suivant l'une des revendications précédentes,
**caractérisé en ce que** des moyens d'augmentation de la conductibilité de la chaleur sont ajoutés à la matière isolante.

8. Transformateur à imprégnation intégrale de résine suivant l'une des revendications précédentes,
**caractérisé en ce qu'**il est incorporé dans la matière isolante au moins deux matières à changement de phase différentes, ayant des points de transition de phase différents, qui sont notamment mélangées l'une à l'autre.
